# EUROPEAN PATENT APPLICATION

(11) **EP 3 125 058 A1**
(43) Date of publication of application: **01.02.2017**
(21) Application number: 15769457.1
(22) Date of filing: 25.03.2015
(51) Int. Cl.: G05D 1/02, G01S 19/14, G01S 19/43, A01B 69/00

(54) **AUTONOMOUSLY TRAVELING WORK VEHICLE**

(30) Priority: 28.03.2014 JP 2014070103
(71) Applicant: Yanmar Co., Ltd., Osaka-shi, Osaka 530-8311 (JP)
(72) Inventor: MIYAKUBO, Takatomi, Osaka-shi Osaka 530-8311 (JP); AOKI, Hideaki, Osaka-shi Osaka 530-8311 (JP)
(74) Representative: Jostarndt Patentanwalts-AG
(86) International application number: PCT/JP2015/059262
(87) International publication number: WO 2015/147111

(57) **Abstract**

The present invention makes it possible to use a satellite positioning system to retain, as history, a position, time, and range at which a position measurement obstacle has occurred. This work vehicle (1), which travels autonomously along a set travel path that has been stored in a storage device of a control device (30), is provided with a position calculation means that measures the position of the autonomously traveling work vehicle (1) using a satellite positioning system, with an automatic travel means that makes the autonomously traveling work vehicle (1) travel automatically, and with a control device (30), wherein the control means (30), when the current position cannot be measured by the satellite positioning system, stores the position and time at which the position measurement obstacle occurs and the range over which the position measurement obstacle occurs in a storage device (30a), and displays, on a display (113) of a display means (49) or a remotely operated device (112), the fact that position measurement is impossible.

## Description

### Technical Field

The present invention relates to a technique in which time and a position where position measurement failure has occurred, in an autonomously traveling work vehicle capable of autonomously traveling by using a satellite positioning system, are stored, and a reminder can be issued.

### Background Art

In one conventionally known technique, an autonomously traveling work vehicle, capable of autonomous traveling using the GPS, can autonomously travel in a set target direction. The autonomous traveling stops when position measurement fails to be normally carried out. When the vehicle recovers to a normal state where the position measurement can be normally performed within a predetermined time period after the stopping, an operator of the autonomous traveling resumes the autonomous traveling (for example, see PTL 1).

### Citation List

### Patent Literature

PTL 1: Japanese Unexamined Patent Application Publication No. 2000-29520

### Summary of Invention

### Technical Problem

Known causes of the position measurement failure include: a failure to receive a signal from satellites due to a windbreak or a building; a failure to receive electromagnetic waves reflected on a building and the like; and the like. In many cases, the locations and time periods in which the position measurement failure occurs are associated with approximately determined positions and time periods. Thus, countermeasures can be prepared in advance before work takes place in the determined positions and time period, so that improved work efficiency can be achieved with the work stoppage prevented. Furthermore, no time needs to be wasted for finding out the cause.

The present invention is made in view of the circumferences described above, and features recognition of positions and time where position measurement failure occurs while work is in process, with positions and time where the position measurement failure has occurred stored, so that a reminder can be issued to an operator when the work is to be performed again at such a position or time, enabling the operator to swiftly take countermeasures.

### Solution to Problem

Next, a solution for the problems to be solved by the present invention descried above will be described.

The present invention relates to an autonomously traveling work vehicle including: a position calculation means configured to measure a position of the work vehicle by using a satellite positioning system; an autonomous traveling means configured to cause the work vehicle to autonomously travel; and a control device. The work vehicle autonomously travels along a set traveling route stored in a storage device of the control device. When the satellite positioning system fails to measure a current position, the control means stores a position, time, and an area where the position measurement failure has occurred in the storage device, and displays on a display means, information indicating that the position measurement failure has occurred.

With the present invention, the position, the time, and the area where the position measurement failure has occurred may be readable from the storage device as appropriate.

With the present invention, a reminder may be issued through sound or displaying when the vehicle approaches the position where the position measurement failure has occurred.

### Advantageous Effects of Invention

With the configuration described above, the position and time where position measurement failure has occurred can be recorded as a history that can be used as a material for preparing countermeasures for avoiding electric-wave disturbance. Thus, a route ensuring appropriate traveling can be determined in planning a next work route. Furthermore, an operator can relax and easily handle position measurement errors, due to the electric-wave disturbance and the like, which occurs while the next work is in process.

### Brief Description of Drawings

[Fig. 1] Fig. 1 is a schematic side view illustrating an autonomously traveling work vehicle, GPS satellites, and a reference station.
[Fig. 2] Fig. 2 is a block diagram illustrating control.
[Fig. 3] Fig. 3 is a diagram illustrating a status of work performed by an autonomously traveling work vehicle and an accompanied traveling work vehicle.
[Fig. 4] Fig. 4 is a flowchart illustrating control performed on position measurement failure.
[Fig. 5] Fig. 5 is a map illustrating a status of the position measurement failure.

### Description of Embodiments

In an embodiment described below, an autonomously traveling work vehicle 1 that can autonomously travel by using a satellite positioning system is a tractor, and a rotary tiller 24, serving as a work machine, is attached to a rear portion of the autonomously traveling work vehicle 1. The work vehicle is not limited to the tractor, and may be a combine harvester and the like. The work machine is not limited to the rotary tiller, and may be a hiller, a lawn mower, a rake, a seeder, a fertilizing machine, a wagon, or the like.

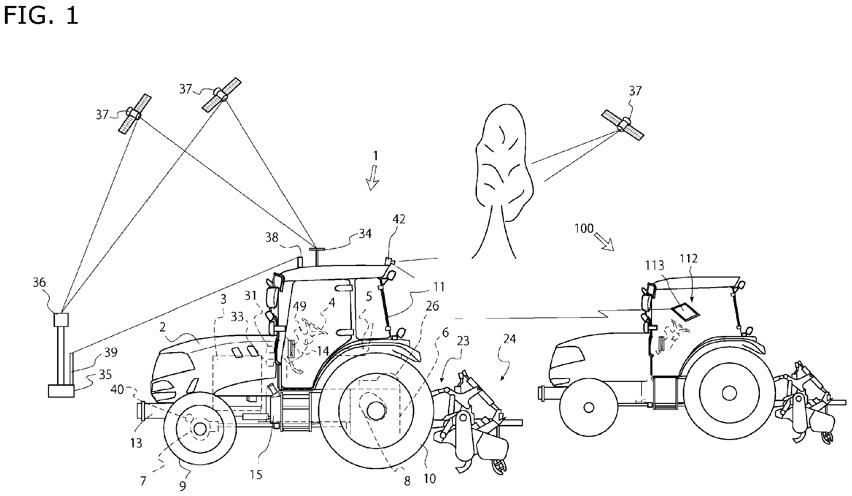

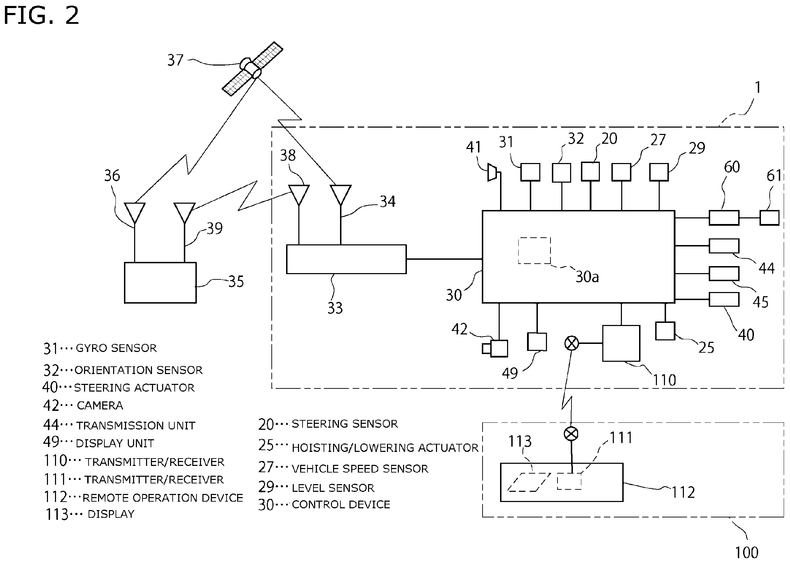

The entire structure of the tractor, which is the autonomous travel work vehicle 1 will be described with reference to Fig. 1 and Fig. 2. An engine 3 is housed inside a hood 2, and a dashboard 14 is provided inside a cabin 11 behind the hood 2, with a steering handle 4, which constitutes a steering control means, on the dashboard 14. Rotating the steering handle 4 turns front wheels 9, 9 to various directions via a steering system. The steering direction of the autonomous travel work vehicle 1 is detected by a steering sensor 20. The steering sensor 20 is an angle sensor such as a rotary encoder and disposed at the base of rotating parts of the front wheels 9. The detection mechanism of the steering sensor 20 is not limited and may be any system whereby the steering direction can be recognized. Rotation of the steering handle 4 may be detected, or an amount of steering in a power steering system may be detected. Detected values obtained by the steering sensor 20 are input to a controller 30.

A driver's seat 5 is located behind the steering handle 4, and a transmission case 6 is disposed below the driver's seat 5. Rear axle cases 8, 8 are connected to the transmission case 6 on both left and right sides, and rear wheels 10, 10 are supported on the rear axle cases 8, 8 via axles. Power from the engine 3 is transmitted at varying speed ratios by a transmission (main gear box and auxiliary gear box) inside the transmission case 6 to drive the rear wheels 10, 10. A hydraulic stepless transmission can constitute the transmission, for example, wherein a swash plate of a variable capacity hydraulic pump is actuated by a speed change means 44 such as a motor to enable gear changes. The speed change means 44 is connected to the controller 30. The number of rotation of the rear wheels 10 is detected by a speed sensor 27 and input as a traveling speed to the controller 30. The method for detecting the vehicle speed and the location of the speed sensor 27 are not limited to particular ones.

A transmission case 6 incorporates a PTO clutch and a PTO transmission. The PTO clutch is turned ON/OFF by a PTO input means 45 that is connected to a control device 30. Whether to transmit driving force to the PTO shaft can be controlled with the PTO input means 45. The control device 30 includes: a central processing unit (CPU), a storage device 30a such as a RAM or a ROM; an interface; and the like. The storage device 30a stores a program and data for operating the autonomously traveling work vehicle 1.

A front axle case 7 is supported on a front frame 13 that carries the engine 3. The front wheels 9, 9 are supported via bearings on both sides of the front axle case 7, so that the power from the transmission case 6 can be transmitted to the front wheels 9, 9. The front wheels 9, 9 are the steering wheels, so that they can be turned when the steering handle 4 is rotated. The front wheels 9, 9 can be turned to left and right by a steering actuator 40, which is a power steering cylinder that constitutes a steering drive means. The steering actuator 40 is connected to the controller 30 and driven under autonomous traveling control.

An engine controller 60 that is an engine rpm controller is connected to the controller 30. An engine rpm sensor 61, a water temperature sensor, a hydraulic sensor and the like are connected to the engine controller 60, to detect the condition of the engine. The engine controller 60 detects a load from a preset rpm and an actual rpm and executes control to avoid overloading, as well as transmits the condition of the engine 3 to a remote controller 112 to be described later for presentation on a display 113 that constitutes a display means.

A level sensor 29 that detects the fuel level is disposed in a fuel tank 15 below steps and connected to the controller 30, while a fuel gauge that shows the remaining amount of fuel is provided in a display means 49 on the dashboard of the autonomous travel work vehicle 1 and connected to the controller 30. The controller 30 transmits information on the remaining amount of fuel to the remote controller 112, and the remaining amount of fuel and operable time are indicated on the display 113 of the remote controller 112.

The display means 49 that displays an engine revolution counter, a fuel gauge, a hydraulic pressure and the like, a monitor indicating an abnormality, setting values or the like is disposed on the dashboard 14.

A rotary tiller 24 is mounted as an implement such as to be movable up and down via an implement attachment system 23 at the back of the tractor body for tilling operation. An elevator cylinder 26 is provided on the transmission case 6. An elevator arm that constitutes the implement attachment system 23 is rotated by extending and contracting the elevator cylinder 26, so that the rotary tiller 24 can be moved up and down. The elevator cylinder 26 is extended and contracted by operation of an elevator actuator 25. The elevator actuator 25 is connected to the controller 30.

A moving receiver 33 that constitutes a satellite positioning system is connected to the controller 30. A moving GPS antenna 34 and a data receiving antenna 38 are connected to the moving receiver 33. The moving GPS antenna 34 and data receiving antenna 38 are provided on the cabin 11. The moving receiver 33 includes a position calculator for determining positions and transmits latitudes and longitudes to the controller 30, so that the current location can be known. Using a global navigation satellite system (GNSS) such as Japanese quazi-zenith satellites system or Russian GLONASS satellite navigation system in addition to the American GPS system can provide highly accurate positioning, but this embodiment will be described as using the GPS.

The autonomous travel work vehicle 1 is equipped with a gyro sensor 31 for obtaining information on changes in orientation of the vehicle body, and a direction sensor 32 for detecting the moving direction, these sensors being connected to the controller 30. Note, the direction sensor 32 may be omitted, since the direction of movement can be calculated from the position measurements using the GPS.

The gyro sensor 31 detects angular velocities of angles in the front-to-back direction (pitch) and left-to-right direction (roll), and turning angle (yaw) of the vehicle body of the autonomous travel work vehicle 1. Through integration of these three angular velocities, the pitch and roll angles in the front-to-back direction and left-to-right direction, and the yaw angle of the vehicle body of the autonomous travel work vehicle 1 can be determined. Specific examples of the gyro sensor 31 include mechanical gyros, fiber optic gyros, fluid gyros, vibration gyros, and so on. The gyro sensor 31 is connected to the controller 30 and inputs information on the three angular velocities to the controller 30.

The direction sensor 32 detects the direction (of movement) of the autonomous travel work vehicle 1. Specific examples of the direction sensor 32 include magnetic direction sensors and the like. The direction sensor 32 is connected to the controller 30 and inputs information on the direction of the vehicle body to the controller 30.

The controller 30 thus determines the orientation of the autonomous travel work vehicle 1 (direction and pitch, roll, and yaw of the vehicle body) through processing of signals obtained from the gyro sensor 31 and direction sensor 32 using an orientation/direction calculator.

Next, the method for acquiring position information of the autonomous travel work vehicle 1 with the use of the GPS (Global Positioning System) will be described.

The GPS was originally developed as a navigation aid for aircraft, ships, and the like. The system is made up of 24 GPS satellites (4 each in 6 orbital planes) orbiting at about 20,000 km, a control station that tracks and controls the GPS satellites, and users' receivers for the positioning.

There are various positioning methods that use the GPS, including single positioning, relative positioning, differential GPS (DGPS) positioning, and real-time kinematic GPS positioning, any of which can be used. In this embodiment, the RTK-GPS positioning that provides high measurement accuracy is adopted, and this method will be described with reference to Fig. 1 and Fig. 2.

RTK (Real Time Kinematic) GPS positioning is a technique in which GPS surveying is performed simultaneously at a reference station whose position is known and at a moving station whose position is being determined, and data obtained at the reference station is transmitted to the moving station in a wireless manner or via other methods in real time so as to determine the position of the moving station in real time based on the position results of the reference station.

In this embodiment, the moving receiver 33, the moving GPS antenna 34, and the data receiving antenna 38, which constitute the moving station, are disposed on the autonomous travel work vehicle 1, while a fixed receiver 35, a fixed GPS antenna 36, and a data transmitting antenna 39, which constitute the reference station, are located at a predetermined position where it will not obstruct operations in the field. In the RTK (Real Time Kinematic) GPS positioning in this embodiment, phase measurements are carried out both in the reference station and the moving station (relative positioning), and the positioning data obtained by the fixed receiver 35 of the reference station is transmitted from the data transmitting antenna 39 to the data receiving antenna 38.

The moving GPS antenna 34 arranged in the autonomous travel work vehicle 1 receives signals from GPS satellites 37, 37. The signals are transmitted to the moving receiver 33 for determining its position. At the same time, the fixed GPS antenna 36 at the reference station receives signals from the GPS satellites 37, 37, and the fixed receiver 35 determines its position, transmits data to the moving receiver 33, and determines the position of the moving station by analyzing the surveyed data. The position information thus obtained is transmitted to the controller 30.

As described above, the control device 30 of the autonomously traveling work vehicle 1 includes the autonomous traveling means implementing the autonomous traveling. The autonomous traveling means receives electric waves transmitted from the GPS satellites 37, 37, ... to obtain positional information of the vehicle body once in every predetermined time period with the mobile communication device 33. The autonomous traveling means further obtains displacement information and orientation information respectively from the gyro sensor 31 and the orientation sensor 32. The autonomous traveling means controls the steering actuator 40, the transmission means 44, the hoisting/lowering actuator 25, the PTO input means 45, the engine controller 60, and the like based on the positional information, the displacement information, and the orientation information so that autonomous traveling and autonomous work can be achieved with the vehicle body traveling along a predetermined set route R set in advance. Positional information of an outer circumference of a farm field H, as the work field, is set in advance and stored in the storage device 30a with a known method.

The autonomously traveling work vehicle 1 is provided with an obstacle sensor 41 that is connected to the control device 30 and prevents collision with an obstacle. For example, the obstacle sensor 41 is an ultrasound sensor that is connected to the control device 30 and disposed at a front, a side, or a rear portion of the vehicle body. The obstacle sensor 41 detects an obstacle in front of, on left or right of, or behind the vehicle body, so that control is performed in such a manner that the vehicle body that has entered a predetermined distance range from the obstacle stops.

The autonomously traveling work vehicle 1 is provided with a camera 42 that is connected to the control device 30, and captures an image of a portion in front of the vehicle and an image of the work machine. The image captured by the camera 42 is displayed on the display 113 of the remote operation device 112 on an accompanied traveling work vehicle 100.

The remote operation device 112 performs operations such as setting the traveling route R of the autonomously traveling work vehicle 1, remotely operating the autonomously traveling work vehicle 1, monitoring the traveling status of the autonomously traveling work vehicle 1 and a working status of the work machine, and storing operation data.

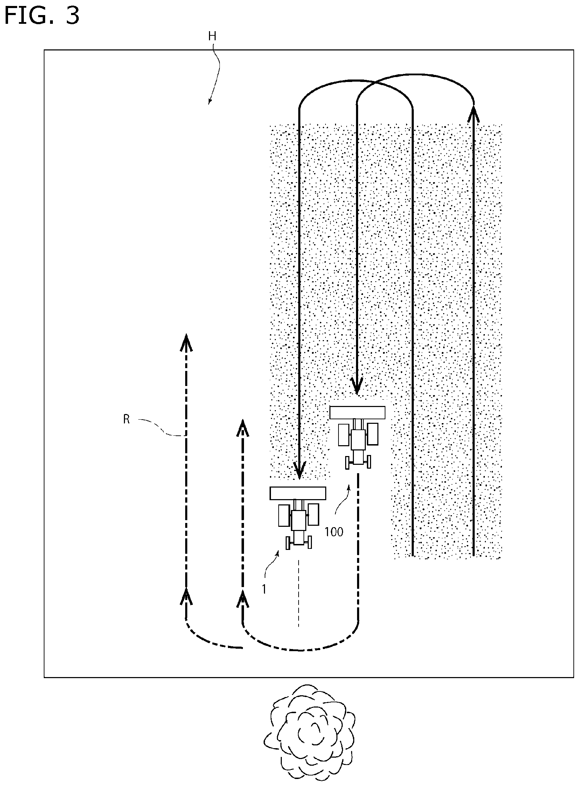

In the present embodiment, the operator rides on, drives, and operates the accompanied traveling work vehicle 100 provided with the remote operation device 112, and thus can operate the autonomously traveling work vehicle 1. As illustrated in Fig. 3, the accompanied traveling work vehicle 100 is diagonally behind the autonomously traveling work vehicle 1 while traveling and working, and monitors and operates the autonomously traveling work vehicle 1. However, this should not be construed in a limiting sense. The accompanied traveling work vehicle 100 may be behind the autonomously traveling work vehicle 1 while traveling and working, or the accompanied traveling work vehicle 100 may travel in front of the autonomously traveling work vehicle 1, depending on work to be performed. The basic configuration of the accompanied traveling work vehicle 100 is approximately the same as the autonomously traveling work vehicle 1, and thus will not be described in detail. The accompanied traveling work vehicle 100 may be provided with the mobile communication device 33 and the mobile GPS antenna 34 for the GPS.

The remote operation device 112 can be detachably attached to the operation unit, such as a dashboard, of each of the accompanied traveling work vehicle 100 and the autonomously traveling work vehicle 1. The remote operation device 112 may be operated while being attached to the dash board of the accompanied traveling work vehicle 100, carried out of the accompanied traveling work vehicle 100 and operated, or attached to the dash board of the autonomously traveling work vehicle 1 to be operated. For example, the remote operation device 112 is a laptop personal computer or is a tablet personal computer as in the case of the present embodiment.

The autonomously traveling work vehicle 1 and the remote operation device 112 are respectively provided with transmitters/receivers 110 and 111 for establishing communications, and thus can wirelessly communicate with each other. The transmitter/receiver 111 is integrally formed with the remote operation device 112. The communication means can communicate with each other through a wireless LAN such as WiFi. The remote operation device 112 includes a casing that has a surface provided with a display 113, serving as a touch panel operation screen that can be operated through touching on the screen. The casing incorporates the transmitter/receiver 111, the CPU, the storage device, a battery, and the like.

The autonomously traveling work vehicle 1 can be remotely operated with the remote operation device 112. Examples of operations that can be thus performed on the autonomously traveling work vehicle 1 include: emergency stop; temporary stop; restarting; gear change; engine revolution change; hoisting/lowering of the work machine; and PTO clutch ON/OFF. Thus, the operator can easily remotely operate the autonomously traveling work vehicle 1, by controlling the accelerator actuator, the transmission means 44, and the PTO input means 45 via the transmitter/receiver 111, the transmitter/receiver 110, and the control device 30, with the remote operation device 112.

The display 113 can display an image of a surrounding portion captured by the camera 42, the statuses of the autonomously traveling work vehicle 1 and the work, information on the GPS, an operation screen, and the like, so that the operator can monitor these items.

The status of the autonomously traveling work vehicle 1 includes a traveling status, a status of an engine, a status of the work machine, and the like. The traveling status includes a shift position, a vehicle speed, a remaining fuel, battery voltage, and the like. The status of the engine includes engine speed, load factor, and the like. The status of the work machine includes the type of the work machine, the PTO speed, the height of the work machine, and the like. The statuses are each displayed as a numerical value or a level meter on the display 113.

The work status includes: an operation route (a target route or a set traveling route); work steps; a current position; a distance to a headland calculated based on the steps; a remaining route; the number of steps; current work time; remaining work time; and the like. The remaining route can be easily recognized by filling, in the entire work route, the finished work route. The direction of turning and the like as the step subsequent to the current step can be easily recognized with the subsequent step pointed by an arrow from the current position.

The information on the GPS includes: the latitude and the longitude indicating the actual position of the autonomously traveling work vehicle 1; the number of captured satellites; an intensity of electric wave received; abnormality of the positioning system; and the like.

Next, a case will be described where abnormality, that is, a position measurement failure occurs in the positioning system while the autonomous traveling and working are in process.

The control device 30 determines whether the GPS antenna 34 or the mobile communication device 33 has failed or the position measurement error has occurred. When the GPS antenna 34 or the mobile communication device 33 has failed, the traveling and the working stop, and a recovery operation such as repairing is performed. In the present embodiment, control is performed as a countermeasure against the position measurement failure that has occurred due to a failure to receive electric waves from the GPS satellites 37 or electric-wave disturbance including: a case where the electric waves from the GPS satellites 37 are temporarily unable to be received due to a windbreak, a building, or the like; a case where electric waves are reflected on a building or the like to interfere with each other; a case where the number of captured GPS satellites 37 is small; and the like.

The orbit of the GPS satellites 37 can be easily obtained from information on the Internet and the like. Thus, the number of captured GPS satellites 37 and their angles and the like at a predetermined position can be estimated, whereby the position where the position measurement failure occurs can be estimated and displayed once the work day and time and position (range) are determined. When a history of position measurement failure that has occurred in the past due to a building, a windbreak, or the like has been registered, the position (orientation) and the size (height) of such a building and windbreak can be roughly estimated based on the positions of the GPS satellites 37 and of the autonomously traveling work vehicle 1. Thus, time and a position (a range where the position measurement failure has occurred) where the position measurement failure is likely to occur can be roughly recognized. When the vehicle approaches the position where the position measurement failure is likely to or could occur, a warning is displayed on the display 113, or issued through sounds or voices.

When the position measurement failure occurs, the control device 30 continues the autonomous traveling with a mode switched to inertial navigation. The control device 30 displays information "position measurement failure occurred" on the display means 49 of the autonomously traveling work vehicle 1, and at the same time, transmits a signal indicating the information to the remote operation device 112, so that the information is displayed on the display 113 as a warning. When the position measurement failure occurs, other pieces of information may be further displayed. Such information includes: how many GPS satellites 37 are currently captured, and how many more are needed; angles of the GPS satellites 37 (blocked directions); a cause such as a radio field intensity (low reception accuracy) or erroneous measurement data; and the like. The position and time where the position measurement failure has occurred (is occurring), the number of captured GPS satellites 37 and their angles, and the like are stored in the storage device 30a.

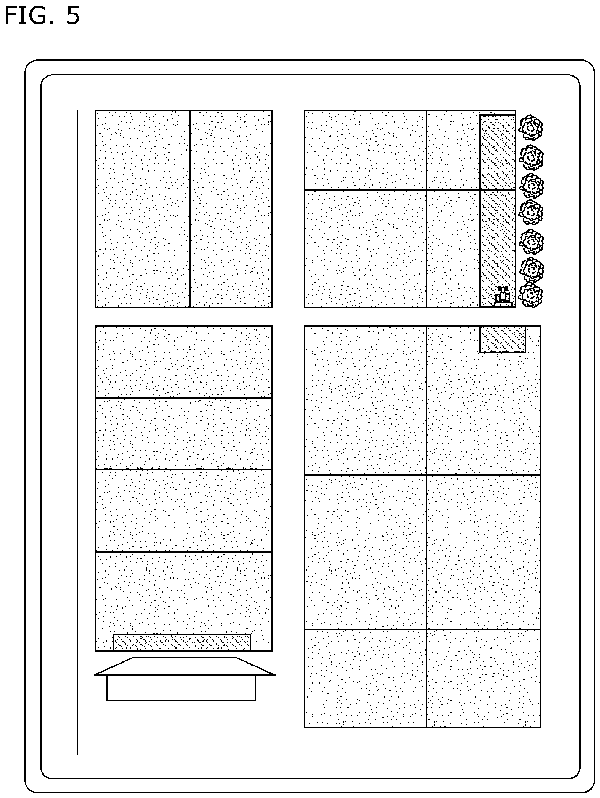

This data on the position measurement failure that has occurred can be sent to a host computer or control devices of other work vehicles via a network, to be usable for the next work or other types of work. In the host computer, the data can be added to a database to be analyzed or used for generating a map to be displayed. When the map can be thus displayed, it can be easily recognized that the position measurement failure occurs in hatched areas illustrated in Fig. 5 (as areas where the position measurement failure has occurred), due to the windbreak and the building, whereby the operator can easily be prepared.

The autonomously traveling work vehicle 1 is provided with the gyro sensor 31 serving as an inertial measurement unit (IMU). Thus, when the position measurement failure occurs, the mode can be switched to the inertial navigation, so that the autonomous traveling and the work (traveling) can be maintained for a certain distance. When the vehicle cannot recover from the position measurement failure within a predetermined time period or a predetermined traveling distance, the autonomously traveling work vehicle 1, as well its work machine, is stopped to wait for the recovery. The set time period or the set distance is a time period or a distance in which the traveling based on the inertial navigation on the set work route is guaranteed. The vehicle that has stopped cannot recover from the position measurement failure on its own to resume the autonomous traveling. Thus, the operator switches the mode to manual traveling, so that the vehicle is manually operated to travel to a position where the vehicle can recover from the position measurement failure.

The vehicle that has recovered from the position measurement failure and thus has resumed the work turns around upon reaching an edge of the farm field, that is, the headland, and continues the work. The vehicle performing back-and-forth work (row-to-row tilling) again passes through a portion near the position where the position measurement failure has occurred, and thus might be plagued by the position measurement failure. Thus, when the vehicle approaches the position where the position measurement failure has occurred, information indicating that the position measurement failure might occur is displayed on the display 113 as a reminder. When the position measurement failure occurs, the warning is similarly displayed on the display 113, the mode is switched to the inertial navigation, and the control similar to that described above is performed.

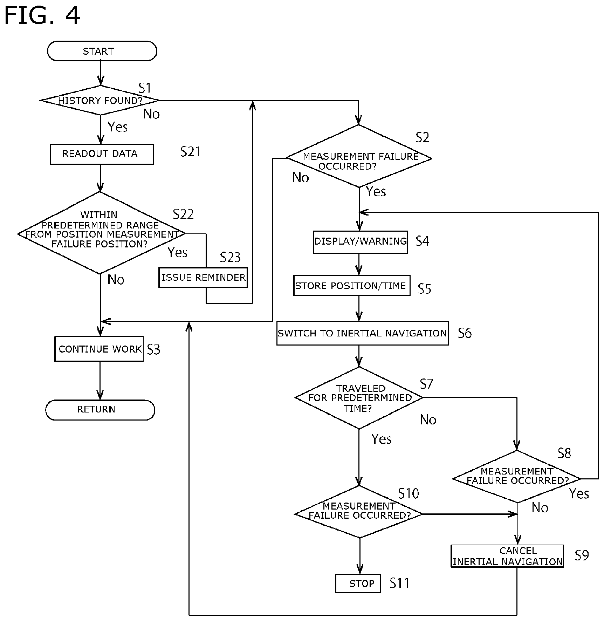

A more detailed description will be given with reference to a flowchart in Fig. 4. First of all, whether the work using the satellite positioning system has been performed in the farm field H as the work target, that is, whether there is a work history is determined (S1). When there is no history, it is determined that the position measurement failure has not occurred (S2). When the position measurement failure has not occurred, normal work is performed (S3). When the position measurement failure has occurred, information indicating the occurrence is displayed and a warning is issued (S4). The position and the time where the position measurement failure is occurring are stored in the storage device 30a (S5), and the mode is switched to the inertial navigation (S6). When the vehicle has not recovered from the position measurement failure (S8) before traveling under the inertial navigation for the set time period (or set distance) is completed (S7), the processing proceeds to step S4. When the vehicle has recovered from the position measurement failure, the inertial navigation is cancelled and the position and the time of the recovery are stored in the storage device 30a (S9). Thus, the duration of the position measurement failure and the route involving the position measurement failure are stored. Then, the processing proceeds to step S3 with the mode switched back to the GPS mode. When the vehicle has travelled for the predetermined time in step S7, whether the position measurement failure is occurring is determined (S10). The processing proceeds to step S9 when the position measurement failure is not occurring. When the position measurement failure is occurring, the traveling and the work are stopped (S11), and this position and time are stored in the storage device 30a. Then, the mode is switched to the manual traveling.

When the history is found in step S1, the location and the time where the position measurement failure has occurred are read out (S21). When the vehicle moves into a predetermined range of distance from the position where the position measurement failure has occurred (S22), a reminder is issued through the displaying on the display 113 (S23), and the processing proceeds to step S2. The reminder and the warning are issued through sounds from a speaker, a buzzer, or the like, lighting of a lamp, or the displaying on the display 113 or the like. The reminder and the warning are preferably issued through different types of sound or different expressions.

When the work is completed for one farm field, the area and the time period where the position measurement has occurred (area where the reception failure has occurred) in the farm field are added to the map data and stored in the storage device 30a. Thus, countermeasures and improvement plans can be easily figured out for the traveling route in planning the next work in the farm field. For example, the work traveling route is planned with the history read out from the storage device 30a and displayed. Thus, the work time period and the traveling direction are adjusted for the farm field including an area where the position measurement failure occurs.

As described above, the work vehicle includes: a position calculation means configured to measure a position of the autonomously traveling work vehicle 1 by using a satellite positioning system; an autonomous traveling means configured to cause the autonomously traveling work vehicle 1 to autonomously travel; and the control device 30. The work vehicle autonomously travels along a set traveling route stored in a storage device of the control device 30. When the satellite positioning system fails to measure a current position, the control means 30 stores a position, time, and an area where the position measurement failure has occurred in the storage device 30a, and displays on the display means 49 and display 113 of the remote operation device 112, information indicating that the position measurement failure has occurred. Thus, the position and time where position measurement failure has occurred can be recorded as a history that can be used as a material for preparing countermeasures for avoiding position measurement failure. Thus, a route ensuring appropriate traveling can be determined in planning a next work route. Furthermore, an operator can relax and easily handle position measurement errors, due to position measurement failure and the like, which occurs while the next work is in process.

The position, the time, and the area where the position measurement failure has occurred are readable from the storage device 30a as appropriate. Thus, a route ensuring the position measurement can be selected when the position measurement failure occurs or when a traveling route is set. Thus, the traveling route can be easily planned.

When the vehicle approaches the position where the position measurement failure has occurred, the reminder is issued through sound with a speaker, a buzzer, or the like, or displaying using a lamp, the display 113, or the like. Thus, the area where the position measurement failure is expected to occur can be easily recognized, whereby the operator can easily figure out countermeasures against position measurement errors.

### Industrial Applicability

The present invention can be applied to a construction machine, a farm work vehicle, and the like as a work vehicle using a satellite positioning system to perform work in a predetermined farm field and the like.

### Reference Signs List

- 1: autonomously traveling work vehicle
- 30: control device
- 30a: storage device
- 49: display means
- 112: remote operation device
- 113: display

## Claims

1. An autonomously traveling work vehicle comprising:
a position calculation means configured to measure a position of the work vehicle by using a satellite positioning system;
an autonomous traveling means configured to cause the work vehicle to autonomously travel; and
a control device,
wherein the work vehicle autonomously travels along a set traveling route stored in a storage device of the control device, and
wherein when the satellite positioning system fails to measure a current position, the control means stores a position, time, and an area where the position measurement failure has occurred in the storage device, and displays on a display means, information indicating that the position measurement failure has occurred.

2. An autonomously traveling work vehicle according to claim 1, wherein the position, the time, and the area where the position measurement failure has occurred are readable from the storage device as appropriate.

3. An autonomously traveling work vehicle according to claim 1, wherein a reminder is issued through sound or displaying when the vehicle approaches the position where the position measurement failure has occurred.
